# EUROPÄISCHE PATENTSCHRIFT

(11) **EP 0 833 428 B1**
(45) Veröffentlichungstag und Bekanntmachung des Hinweises auf die Patenterteilung: **03.12.2003**
(21) Anmeldenummer: 97116981.8
(22) Anmeldetag: 30.09.1997
(51) Int. Cl.: H02K 7/102

(54) **Vorrichtung zum Abbremsen von Elektromotoren**
Electric motor braking device
Dispositif de freinage pour moteur électrique

(30) Priorität: 30.09.1996 BG 96100875
(43) Veröffentlichungstag der Anmeldung: 01.04.1998
(73) Patentinhaber: ELMA AD, 5600 Trojan (BG)
(72) Erfinder: Staevski, Nantscho Marinov, 5600 Trojan (BG); Adarski, Pentscho Kalev, 5600 Trojan (BG); Samitschkov, Vassil Ivanov, 5600 Trojan (BG); Kantschev, Kiril Sabtschev, 5600 Trojan (BG); Markov, Miroslav Minkov, 5600 Trojan (BG); Petkovski, Stoju Minkov, 5600 Trojan (BG); Kolev, Georgi Vassilev, 5600 Trojan (BG); Michov, Jonko Jakinov, 5600 Trojan (BG)
(74) Vertreter: Laufhütte, Dieter, Dr.-Ing.

(56) Entgegenhaltungen:
- EP-A- 0 136 282
- EP-A- 0 360 779
- DE-A- 4 423 494
- DE-A- 19 503 594
- DE-U- 8 716 775
- DE-U- 8 912 776
- PATENT ABSTRACTS OF JAPAN vol. 8, no. 261 (E-281) [1698] , 30.November 1984 & JP 59 132750 A (FUJI DENKI SEIZO), 30.Juli 1984,

## Beschreibung

### BEREICH DER TECHNIK

Die Erfindung betrifft eine Vorrichtung zum Abbremsen von Elektromotoren, einsetzbar in Bereichen, wo nach dem Abschalten oder bei einem Ausfall der Stromversorgung die von dem Motor insbesondere Asynchron-Kurzschlußläufermotor getriebenen Teile möglichst rasch zum Stillstand zu bringen sind.

### AKTUELLER STAND DER TECHNIK

Aus der EP 0360779 B1 ist eine Vorrichtung zum Bremsen von Elektromotoren mit Kurzschlußläufern bekannt, bestehend aus einem topfförmigen Bremskörper aus weichmagnetischem Werkstoff, welcher den einen Kurzschlußring des Läufers frei umfaßt und der am Boden an wenigstens einem zum Kurzschlußring hinragenden Vorsprung mindestens eine Schrägfläche aufweist, welche in der dementsprechenden, an dem Kurzschlußring des Läufers eingearbeiteten Keilfläche eingreift. Am Boden des Bremskörpers ist eine zylinderförmige Hülse befestigt, die an der radial innen liegenden Seite des Vorsprungs anliegt. Zwischen dem Bremskörper und der Stirnfläche des Läufers in der Hülse ist eine Feder angeordnet, welche den Bremskörper gegen den im Lagerschild des Elektromotors befestigten Bremsbelag andrückt.

Ferner ist aus der DE 44 23 494 A1 ein Elektromotor mit beim Ausschalten automatisch betätigter Bremse bekannt, die aus einem ferromagnetischen Bremsanker mit komplizierter Form besteht, der axial an der Welle des Elektromotors geführt ist, gemeinsam mit dem Läufer gedreht wird und zur Drehrichtung schräg angeordnete erste Keilflächen aufweist, die beim Betätigen der Bremse an zweiten Keilflächen dicht anliegen, die in der Stirnfläche des Kurzschlußringes des Läufers angeformt sind. Zwischen dem Bremsanker und dem Läufer ist im Raum unter dem Kurzschlußring eine Zylinderfeder angeordnet, die den Anker im ausgeschalteten Zustand gegen die Bremsbeläge andrückt, die feststehend mit dem hinteren Lagerschild des Elektromotors verbunden sind. Der Bremsanker wird beim Einschalten vom Läufer durch den darin eindringenden Magnetstrom axial gegen den Federdruck angezogen.

Nachteil dieser Vorrichtung ist die niedrige Betriebszuverläßigkeit hinsichtlich einer schnellen Deformation der Keilflächen, die am Kurzschlußring eingearbeitet sind und die aus Aluminium mit entsprechend niedriger Härte hergestellt werden.

Ein weiterer Nachteil dieser Vorrichtung besteht in der schwachen Anziehkraft des Bremskörpers, die grundsätzlich von dem Streufeld des Elektromotors abhängig ist und in vielen Fällen nicht ausreicht, um die Federkraft voll zu überwinden.

### BESCHREIBUNG DER ERFINDUNG

Der Erfindung liegt die Aufgabe zugrunde, eine robuste Vorrichtung mit einer hohen Betriebszuverläßigkeit und einer höheren Anziehkraft des Bremskörpers herzustellen, um einen sicheren Betrieb unabhängig von auftretenden Netzschwankungen gewährleisten zu können. Bei einer höheren Anziehungskraft kann eine stärkere Feder eingesetzt werden, wodurch eine größere Bremskraft ausgeübt werden kann.

Diese Aufgabe wird erfindungsgemäß durch eine Vorrichtung nach Patentanspruch 1 gelöst. Bevorzugte Ausgestaltungen der Erfindung sind Gegenstand der Unteransprüche.

Es wird also eine Vorrichtung vorgeschlagen, die aus einem auf die Welle des Elektromotors beweglich aufgesteckten Bremskörper besteht, der aus weichmagnetischem Werkstoff durch Stanzen oder Biegen (oder durch andere Methoden) hergestellt wird.

Der Bremskörper besitzt mindestens zwei keilförmige Vorsprünge zum Läufer des Motors hin, wobei im Kurzschlußring des Läufers ein mehrpoliger Magnetfeldleiter eingegossen ist. Auf der Welle des Läufers zwischen dem Bremskörper und dem Kurzschlußläufer ist eine Feder eingebaut, welche den Bremskörper gegen die Friktionskörper, auch Bremsbeläge genannt, die im Lagerschild des Motors oder in andere gehäusefeste Bauteile des Elektromotors eingebaut sind, drückt.

Der bewegliche Bremskörper hat die Form einer Scheibe, im Innendurchmesser sind keilförmige Vorsprünge eingearbeitet. Diese Keilvorsprünge passen genau in die eingearbeiteten Keilausnehmungen an der Welle oder an einer auf der Welle festliegenden Hülse.

Der mehrpolige Magnetfeldleiter ist ein kegelförmig oder zylindrisch geformter Zahnkranz, dessen Zahnenden so gebogen sind, daß sie durch ihre flache Stirnseite am Läuferpaket anliegen und ihre radiale zylindrische Fläche im Magnetfeld des Stators liegt. Die aktive Arbeitsfläche des Magnetfeldleiters ragt aus dem Kurzschlußring und liegt parallel zur Fläche des Bremskörpers.

Nach einer anderen Variante des Bremskörpers ist an der Scheibe des Bremskörpers ein Körper in Form einer Schüssel, (weiter schüsselförmiger Körper genannt) befestigt, dessen Stirnfläche dank der Druckkraft der Feder dicht an den Friktionskörpern anliegt.

Es besteht die Möglichkeit, den schüsselförmigen Körper und die Bremsscheibe als ein Teil zu fertigen, sei es durch Stanzen oder durch Tiefziehen.

Hierbei ist es zweckmäßig, die Arbeitsfläche des schüsselförmigen Körpers so groß wie möglich zu gestalten, um einen größeren Bremseffekt zu erreichen.

Die Vorteile der Erfindung sind zum einen die große Betriebszuverläßigkeit in Folge der hohen Festigkeit und Verschleißfestigkeit der Werkstoffe des Bremskörpers, der Welle des Elektromotors und der mit diesen verbundene Keilvorsprünge und Keilansätze, welche im Betriebszustand unter hohen schlagartigen Belastungen mit hohen Amplituden stehen und zum anderen die höhere Anziehkraft des Magnetfeldes auf den Bremskörper durch den mehrpoligen Magnetfeldleiter, der unter dem Grundmagnetfeld des Elektromotors liegt. Diese größere Anziehkraft ist Voraussetzung für eine stabile Arbeit bei größeren Netzspannungsschwankungen. Zudem werden kürzere Bremszeiten dadurch erreicht, daß stärkere Federn eingebaut sein können.

Ein tellerförmiger Bremskörper gewährleistet einen größeren Durchmesser der Friktionsfläche, was zur Erhöhung des Bremseffektes führt.

### ERKLÄRUNGEN ZU DEN BEIGELEGTEN FIGUREN

In den Zeichnungen zeigen:
- Fig. 1:: einen Längsschnitt der Vorrichtung zum Abbremsen mit einem Teil des Asynchronkurzschlußläufermotors, wobei der Bremskörper als eine Scheibe ausgeführt ist,
- Fig. 2:: einen Längsschnitt der Vorrichtung zum Abbremsen mit einem zweiteiligen Bremskörper aus einem tellerförmigen Körper und einer damit fest verbundenen Scheibe,
- Fig. 3, 3a, 3b: den als Scheibe ausgeführten Bremskörper aus Fig. 1,
- Fig. 4: einen Schnitt des Bremskörpers aus Fig. 2,
- Fig. 5 u. 5a: eine Ausführung des mehrpoligen Magnetfeldleiters, sowie
- Fig. 6 u. 7: Ausführungen der Läuferwelle

### AUSFÜHRUNGSBEISPIELE DER ERFINDUNG

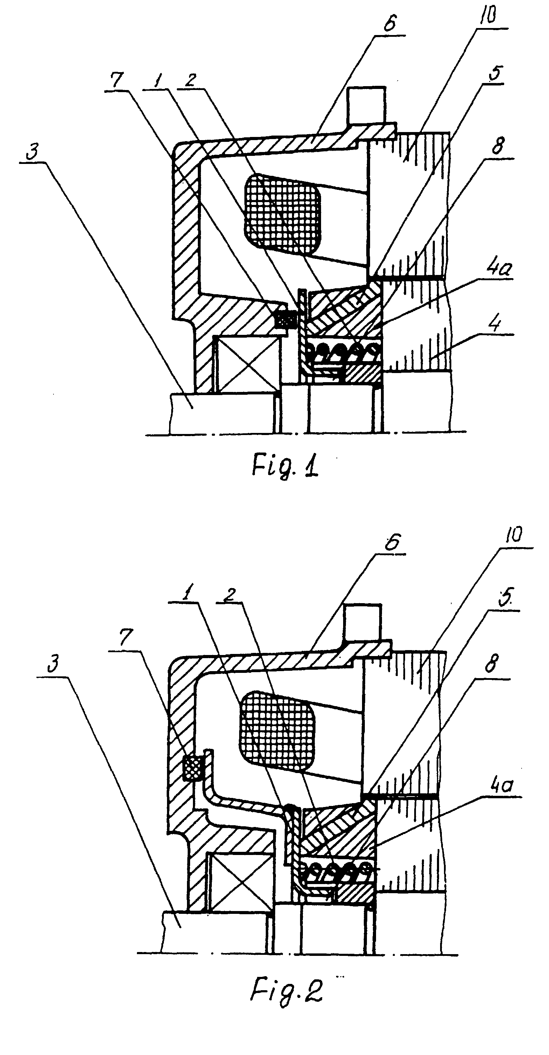

Laut Fig. 1 besteht die Vorrichtung aus einem beweglichen scheibenförmigen Bremskörper 1, welcher in ständigem Kontakt mit einer Druckfeder 2 steht, welche auf der Welle 3 sitzt und von außen durch den Kurzschlußring 4a des Läufers 4 umgeben ist, in den der mehrpolige Magnetfeldleiter 5 eingegossen ist. Im Lagerschild 6 des Elektromotors sind die Bremsbeläge 7 eingebaut, gegen welche die Bremsscheibe 1 anliegt. Auf der Welle 3 (Fig. 6) ist ein Ansatz 3a vorgesehen, wo die Keilaussparungen 8 ausgebildet sind.

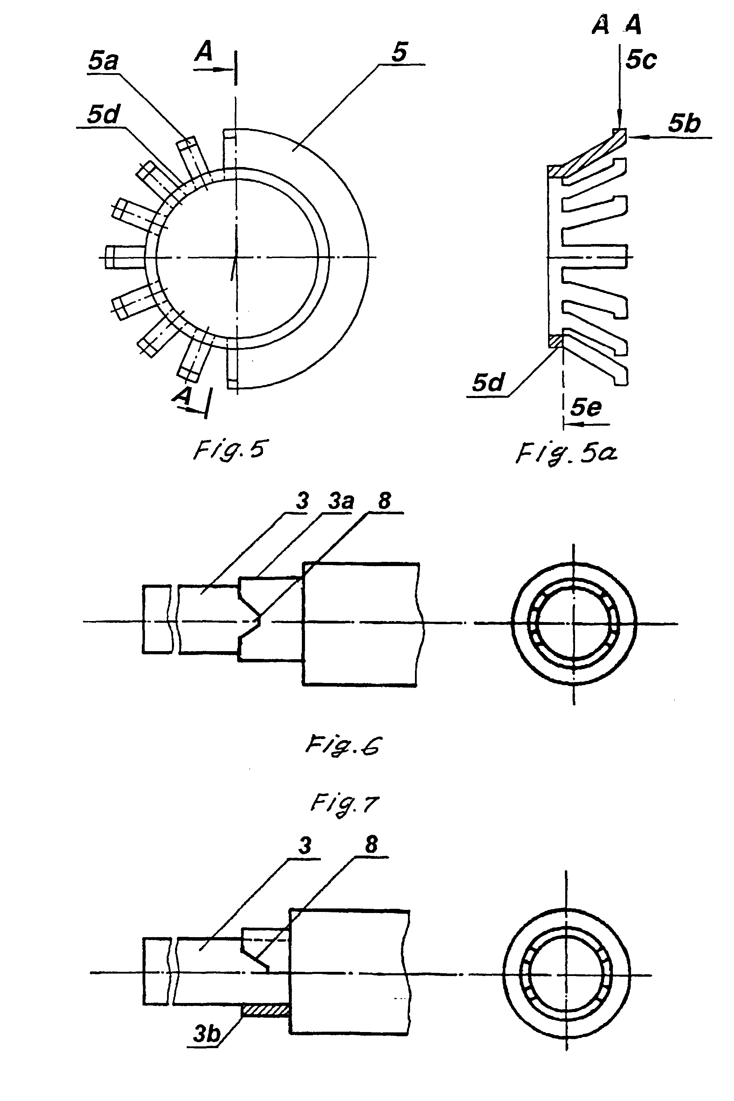

Nach Fig. 7 ist statt des Ansatzes auf der Welle 3 eine Hülse 3b aufgepresst, in welcher die Keilaussparungen 8 ausgebildet sind.

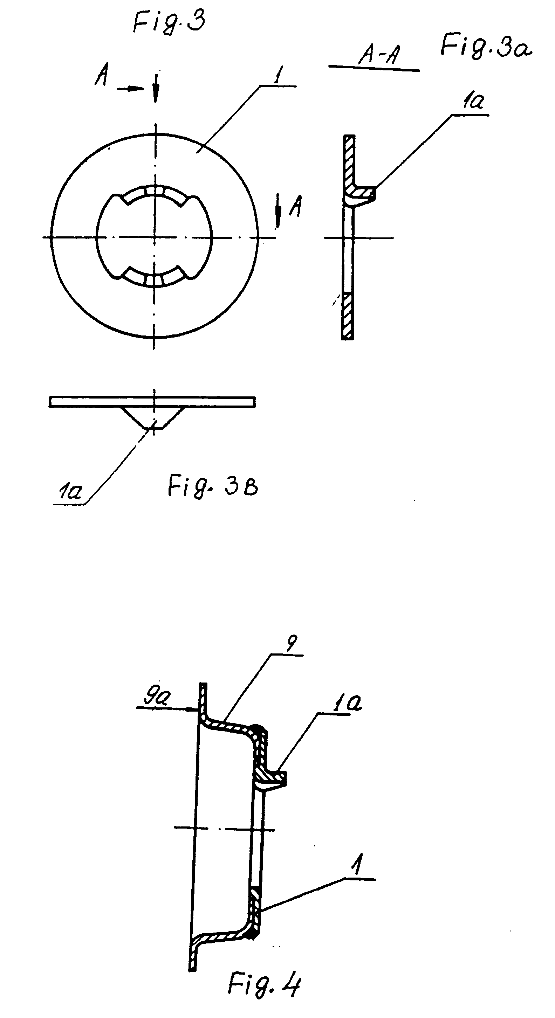

Der scheibenförmige Bremskörper 1 (Fig. 3) hat zwei symmetrisch gelegene keilförmige Vorsprünge 1a, die am gleichen Radius wie die Keilflächen am Ansatz 3a (Fig. 6) an der Welle 3 oder an der Hülse 3b liegen und gegeneinander passen.

Die vorgeschlagene zweite Variante des Bremskörpers (Fig. 4) besteht aus zwei getrennt hergestellten Elementen, nämlich aus der Scheibe 1 und dem daran befestigten tellerförmigen Körper 9 mit der Stirnfläche 9a, welche im von der Feder angedrückten Zustand an den Bremsbelag 7 gepreßt wird. In diesem Fall hat der tellerförmige Körper 9 einen größeren Durchmesser als der Lagersitzkörper, da die Bremsbelagelemente 7 auf der Wand des Lagerschildes 6 befestigt sind.

Selbstverständlich kann der Bremskörper 4 als ein Teil gefertigt werden, wie dies bereits früher erwähnt wurde.

Der Magnetfeldleiter 5 ist ein konusförmiger Zahnkörper, bei welchem die Zahnenden 5a so gebogen sind, daß sie mit ihrer Stirnfläche 5b dicht am Läuferpaket 4 anliegen und ihre radiale Fläche 5c eine Zylinderfläche mit Durchmesser gleich dem Durchmesser des Kurzschlußläufers 4 bilden, wobei diese radiale Fläche im Magnetfeld des Stators 10 liegt. Nach dem Gießen des Kurzschlußringes 4a zusammen mit dem mehrpoligen Zahnkranz 5 werden durch Drehen die Flächen 5d und 5e des Magnetfeldleiters bearbeitet.

### FUNKTION DER ERFINDUNG

Beim Einschalten des Elektromotors an der Netzspannung wird der Bremskörper 1 in den beiden Ausführungsfällen (Fig. 1 und Fig. 2) durch das Magnetfeld von dem mehrpoligen Magnetfeldleiter 5 angezogen und die keilförmigen Vorsprünge 1a gehen leicht in die keilförmigen Aussparungen 8 auf der Welle bzw. auf der Hülse. Die Druckfeder wird dabei zusammengepreßt und die Arbeitsfläche 9a des Bremskörpers 1 wird vom Bremsbelag weggezogen. Der Elektromotor setzt sich in Bewegung und arbeitet.

Beim Abschalten des Motors, oder bei einem Ausfall der Stromversorgung, bricht das Magnetfeld zusammen und der Bremskörper 1 wird von der Feder 2 gegen den im Lagerschild 6 angeordneten Bremsbelag 7 gedrückt. Zusätzlich wird infolge der aufeinander einwirkenden Keilflächen 8 am Bremskörper 1 und an der Läuferwelle 3 der Bremskörper weiter weggedrückt, wodurch die Bremskraft noch erhöht wird. Durch gezielte Wahl der Keilflächen kann die beim Abschalten des Motors entstehende Bremskraft den jeweils gegebenen Verhältnissen angepaßt werden.

Die erfindungsgemäße Vorrichtung kann nicht nur bei Asynchron-Kurzschlußläufermotoren angewandt werden. Es besteht die Möglichkeit, diese Vorrichtung auch bei Gleichstrom- und Synchronmotoren anzuwenden.

### POSITIONSLISTE

Pos. 1 - Bremskörper als Scheibe
Pos. 1a- Keilvorsprünge
Pos. 2 - Feder
Pos. 3 - Welle des Elektromotors
Pos. 3a- Ansatz an der Welle
Pos. 4 - Läufer
Pos. 4a- Kurzschlußring des Läufers
Pos. 5 - mehrpoliger Magnetfeldleiter
Pos. 5a- Zähne
Pos. 5b- flache Ebene (Stirnfläche)
Pos. 5c- radiale Fläche
Pos. 5d- Ring zum Zahnkranz
Pos. 5e- Wirkfläche
Pos. 6 - Lagerschild
Pos. 7 - Bremsbelag
Pos. 8 - Keileinsparungen zu 3a und 3b
Pos. 9 - tellerförmiger Körper
Pos. 9a- Stirnfläche zu 9
Pos. 10- Stator

## Patentansprüche

1. Vorrichtung zum Abbremsen von Elektromotoren mit Kurzschlußläufern, bestehend aus einem auf die Welle (3) des Elektromotors aufgesteckten, beweglichen scheiben- bzw. tellerförmigen Bremskörper (1, 9) aus weichmagnetischem Werkstoff mit mindestens zwei keilförmigen Vorsprüngen (1 a) in Richtung des Läufers (4) des Elektromotors, welche in im Läufer (4) angeformte Aussparungen (8) hineinpassen, wobei zwischen dem Bremskörper (1, 9) und dem Lagerschild (6) des Elektromotors Bremsbeläge (7) angeordnet sind, die feststehend mit dem Lagerschild (6) verbunden sind, und zwischen dem Bremskörper (1, 9) und dem Läufer (4) des Elektromotors eine Druckfeder (2) angeordnet ist, die den Bremskörper (1, 9) im ausgeschalteten Zustand des Elektromotors gegen die Bremsbeläge (7) drückt, **dadurch gekennzeichnet, daß** im Kurzschlußring (4a) des Elektromotors ein mehrpoliger Magnetleiter (5) eingegossen ist, der einen kegel- oder zylinderförmigen Zahnkranz bildet, dessen Zahnenden (5a) derart gebogen sind, daß ihre angeformte Stirnfläche (5b) am Läuferpaket dicht anliegt und ihre umliegende zylindrische Fläche (5c) unter dem Stator (10) des Elektromotors in dessen Magnetfeld angeordnet ist, wobei die dem Bremskörper (1 ) zugewandte Stirnfläche (5e) des Magnetleiters (5) über die Stirnfläche des Kurzschlußringes (4a) des Läufers (4) vorragt, und daß die keilförmigen Aussparungen (8), in die die keilförmigen Vorsprünge (1a) am Innendurchmesser des Bremskörpers (1, 9) eingreifen, auf einem an der Welle (3) des Läufers (4) vorgesehenen Ansatz (3a) oder auf einer mit der Welle (3) feststehend verbundenen Buchse (3b) angeformt sind.

2. Vorrichtung nach Anspruch 1, wobei der Bremskörper aus einer Scheibe (1) besteht.

3. Vorrichtung nach Anspruch 1, wobei der Bremskörper aus einer Scheibe (1 ) sowie einem damit fest verbundenen tellerförmigen Körper (9) mit einer gegen die Bremsbeläge (7) andrückbaren Stirnfläche (9a) besteht.

4. Vorrichtung nach Anspruch 3, wobei die Scheibe (1 ) und der tellerförmige Körper (9) als ein Teil durch Stanzen oder Tiefziehen aus Blechstahl gefertigt sind.

## Claims

1. An apparatus for the braking of electric motors having squirrel cage rotors consisting of a movable disk-shaped or plate-shaped braking member (1, 9) mounted onto the shaft (3) of the electric motor, made of a soft magnetic material and having at least two wedge-shaped projections (1 a) in the direction of the rotor (4) of the electric motor which fit into recesses (8) moulded in the rotor (4), with brake pads (7) being arranged between the braking member (1, 9) and the bearing plate (6) of the electric motor which are connected to the bearing plate (6) in a stationary manner, and with a compression spring (2) being arranged between the braking member (1, 9) and the rotor (4) of the electric motor which presses the braking member (1, 9) against the brake pads (7) in the switched-off state of the electric motor, **characterised in that** a multipole magnetic conductor (5) is cast in the short circuit ring (4a) of the electric motor and forms a cone-shaped or cylindrical ring gear whose tooth ends (5a) are bent such that their moulded end face (5b) tightly contacts the rotor package and their peripheral cylindrical surface (5c) is arranged beneath the stator (10) of the electric motor in its magnetic field, with the end face (5e) of the magnetic conductor (5) facing the braking member (1 ) projecting beyond the end face of the short circuit ring (4a) of the rotor (4) and such that the wedge-shaped recesses (8) into which the wedge-shaped projections (1 a) engage at the inner diameter of the braking member (1, 9) are moulded on a nose (3a) provided at the shaft (3) of the rotor (4) or on a sleeve (3b) connected to the shaft (3) in a stationary manner.

2. An apparatus in accordance with claim 1, wherein the braking member consists of a disk (1 ).

3. An apparatus in accordance with claim 1, wherein the braking member consists of a disk (1) as well as a plate-shaped member (9) fixedly connected thereto having an end face (9a) which can be pressed against the brake pads (7).

4. An apparatus in accordance with claim 3, wherein the disk (1) and the plate-shaped member (9) are made as one part by stamping or deep drawing from sheet steel.

## Revendications

1. Dispositif de freinage pour moteurs électriques avec rotors en court-circuit, composé d'un corps de freinage (1, 9) mobile, en forme de disque respectivement d'assiette, fixé sur l'arbre (3) du moteur électrique, en matériau magnétique souple, doté d'au moins deux avancées (1a) en forme de clavette dans le sens du rotor (4) du moteur électrique, lesquelles s'adaptent dans des évidements (8) formés dans le rotor (4), des garnitures de frein (7), raccordées de manière fixe à la flasque (6), étant disposées entre le corps de freinage (1, 9) et la flasque (6) du moteur électrique, et un ressort de pression (2), qui presse le corps de freinage (1, 9) contre les garnitures de frein (7) lorsque le courant du moteur électrique est coupé, étant disposé entre le corps de freinage (1, 9) et le rotor (4) du moteur électrique, **caractérisé en ce que** dans la bague court-circuitée (4a) du moteur électrique est moulé un conducteur magnétique (5) multipolaire qui forme une couronne dentée conique ou cylindrique dont les extrémités des dents (5a) sont courbées de telle sorte que leur surface frontale (5b) formée est adjacente à l'ensemble du rotor de manière étanche, et leur surface (5c) cylindrique périphérique est disposée sous le stator (10) du moteur électrique dans son champ magnétique, la surface frontale (5e) du conducteur magnétique (5) tournée vers le corps de freinage (1) dépassant de la surface frontale de la bague court-circuitée (4a) du rotor (4), et **en ce que** les évidements (8) en forme de clavette, dans lesquels s'engagent les avancées (1a) en forme de clavette sur le diamètre intérieur du corps de freinage (1, 9), sont formés sur une butée (3a) prévue sur l'arbre (3) du rotor (4) ou sur une douille (3b) raccordée de manière fixe à l'arbre (3).

2. Dispositif selon la revendication 1, le corps de freinage étant constitué d'un disque (1).

3. Dispositif selon la revendication 1, le corps de freinage étant constitué d'un disque (1) ainsi que d'un corps (9) en forme d'assiette qui y est raccordé de manière fixe, avec une surface frontale (9a) pouvant être pressée contre les garnitures de frein (7).

4. Dispositif selon la revendication 3, le disque (1) et le corps (9) en forme d'assiette étant fabriqués comme une pièce par estampage ou emboutissage en acier pour tôle.
